# EUROPEAN PATENT SPECIFICATION

(11) **EP 3 653 900 B1**
(45) Date of publication and mention of the grant of the patent: **04.01.2023**
(21) Application number: 18832531.0
(22) Date of filing: 13.07.2018
(51) Int. Cl.: F16D 41/00, F16D 48/06

(54) **LOW SPEED SYNCHRONIZATION METHOD FOR SYNCHRO-SELF-SHIFTING CLUTCH HAVING LOW SPEED PROTECTION FUNCTION**
NIEDRIGGESCHWINDIGKEITSSYNCHRONISATIONSVERFAHREN FÜR EINE SYNCHRO-SELBSTSCHALTENDE KUPPLUNG MIT NIEDRIGGESCHWINDIGKEITSSCHUTZFUNKTION
PROCÉDÉ DE SYNCHRONISATION À BASSE VITESSE POUR EMBRAYAGE À AUTO-CHANGEMENT DE RAPPORT SYNCHRONE AYANT UNE FONCTION DE PROTECTION À BASSE VITESSE

(30) Priority: 14.07.2017 CN 201710576690
(43) Date of publication of application: 20.05.2020
(73) Proprietor: Shanghai Electric Power Equipment Co., Ltd., Shanghai 201108 (CN); Shanghai Turbine Company Ltd., Shanghai 200240 (CN); Shanghai Electric Gas Turbine Co., Ltd., Shanghai 200240 (CN)
(72) Inventor: ZHANG, Lijian, Shanghai 201108 (CN); LIU, Ji, Shanghai 201108 (CN); FENG, Lei, Shanghai 201108 (CN); CHEN, Ni, Shanghai 201108 (CN); YANG, Hong, Shanghai 201108 (CN); HE, Aping, Shanghai 201108 (CN); HU, Yu, Shanghai 201108 (CN)
(74) Representative: Kraus & Weisert Patentanwälte PartGmbB
(86) International application number: PCT/CN2018/095620
(87) International publication number: WO 2019/011325

(56) References cited:
- CN-A- 101 240 819
- CN-A- 107 387 594
- CN-U- 201 924 029
- CN-U- 206 268 337
- JP-A- 2005 180 370
- JP-B2- 3 630 067
- KR-A- 20160 046 910

## Description

### Field of the invention

The present embodiment relates to a field of clutch, particularly to a low speed synchronization method for a synchro-self-shifting clutch having a low speed protection function.

### Prior arts

A synchro-self-shifting clutch also known as SSS (Synchro-Self-Shifting, automatically synchronous gear shift) clutch is a kind of fully automatic one-way transcend clutch for transmitting power by gear elements. It can be switched automatically according to a level of rotational speeds of an input end and an output end: the synchro-self-shifting clutch is meshed automatically when the rotational speed of the input end is increased with respect to the output end; and the synchro-self-shifting clutch is detached automatically when the rotational speed of the input end is decreased with respect to the output end. That is, the synchro-self-shifting clutch is meshed automatically when the input end has a trend to make its rotational speed more than the rotational speed of the output end; and the synchro-self-shifting clutch is detached automatically when the input end has a trend to make its rotational speed less than the rotational speed of the output end. With the low speed synchronization method for the synchro-self-shifting clutch having a low speed protection function, which will be activated when its pawl has an effective rotational speed more than a certain value, i.e., when the pawl has centrifugal force more than centrifugal force of its tail as with increasing of the rotational speed of the input end and increasing in the centrifugal force, the pawl can fly under the action of centrifugal force and can be coupled with a ratchet. Therefore, there is a critical rotational speed interval from an invalid state to activation state of the pawl for the synchro-self-shifting clutch having a low speed protection function, and the critical rotational speed interval can be measured by a manufactory test. The pawl is not fully open in this interval, Its state is uncertain, the synchro-self-shifting clutch may be damaged if the rotational speeds of the input end and the output end coincide with each other, and the rotational speed of the input end is more than the rotation speed of the output end

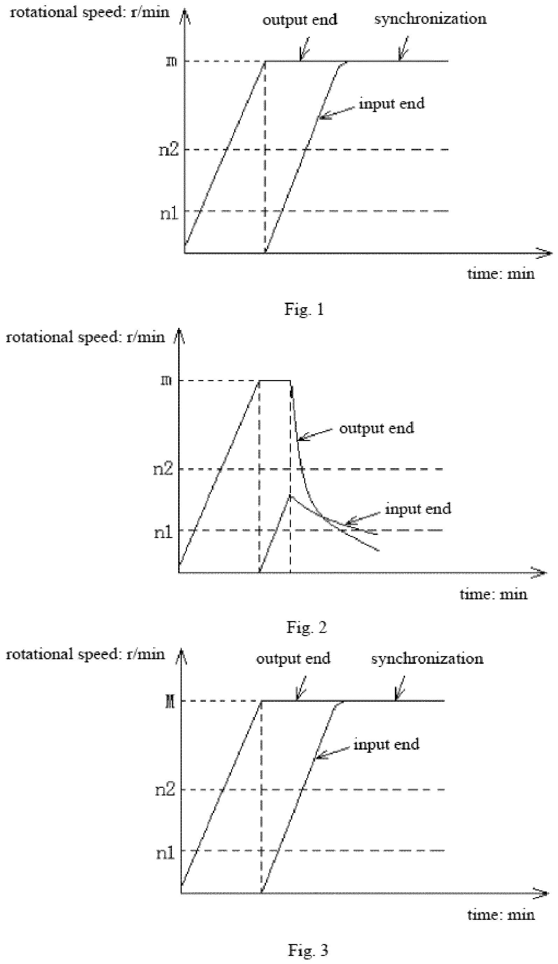

As shown in Fig. 1, a low speed synchronization method for a synchro-self-shifting clutch having a low speed protection function according to an existing technology is: a rotation speed of an output end is increased to and is kept at a synchronization target speed m r/min, and then a rotation speed of an input end is also increased to m r/min, the synchro-self-shifting clutch will be meshed automatically when the input end has a trend to make its rotation speed more than that of the output end. As shown in Fig. 2, in the process to increase the rotation speed of the input end, if tripping occurs at the output end, the rotation speed of the output end will be fallen away. Usually, when tripping occurs at the output, the input also trips. Because the rotational speed of the output end decreases rapidly, the speed fall off curve is steeper than that of the input end. Therefore, the rotation speed of the input end and the rotational speed of the output end are likely to coincide with each other within a critical rotational speed interval of n1-n2 r/min, thus there is a risk of damage to the synchro-self-shifting clutch, especially when the synchronous target speed m r/min is close to the upper limit n2 r/min of the critical rotational speed interval n1-n2 r/min of the synchro-self-shifting clutch, in the event of failure, more likely to cause the synchro-self-shifting clutch to be damaged.

To avoid this risk, it is required that the synchronous target speed m r/min should be much higher than the upper limit n2 r/min of the critical rotational speed interval n1- n2 r/min of the synchro-self-shifting clutch, and the synchro-self-shifting clutch is not allowed to synchronize in a low speed range similar to its critical rotational speed interval of n1-n2 r/min, to avoid the rotation speed of the input end and the rotational speed of the output end to be coincided with each other within a critical rotational speed interval of n1-n2 r/min when tripping occurs. However, this greatly limits the application of the synchro-self-shifting clutch having a low speed protection function.

For example, a synchro-self-shifting clutch having a low speed protection function applied in the gas-steam uniaxial combined cycle unit, in which the effective speed of the pawl during acceleration is 700 r/min, and the effective recovery during deceleration is 350 r/min, has a critical rotational speed interval of 350-700 r/min accordingly. Because there is a great safety hazard in synchronization at the rotational speed close to the critical rotational speed interval, it is not allowed to synchronize at the low speed near the critical rotational speed interval. At present, a synchro-self-shifting clutch in the gas-steam uniaxial combined cycle unit is only allowed to synchronize at the speed of 3000 r/min which results in the greater influence on the flexibility of the unit.

KR20160046910A discloses a method for controlling coupling between a first machine including a first rotating shaft having an associated first positional phase angle defined by a first shaft indicia and a second machine including a second rotating shaft having an associated second positional phase angle defined by a second shaft indicia using a clutch. A rotational speed and rotational angle of the first shaft are monitored, and rotation of the second shaft is controlled by bringing the second shaft to a predetermined rotational speed relative to the first shaft speed. Acceleration of the second shaft is controlled such that the second shaft indicia is within a predetermined angle relative to the first shaft indicia upon the second shaft being brought to the predetermined rotational speed, at which point the first and second shafts are coupled such that the second shaft indicia is within the predetermined angle relative to the first shaft indicia. JP2005180370A discloses an uniaxial combined cycle power generating plant capable of independently stopping a gas turbine at the plant shutdown and shortening shutdown period for the plant and a method of controlling the plant, and the power generating plant comprises a steam turbine 2, a generator 3, and the gas turbine 1 having a starter 7, which are arranged on one axis. An SSS clutch 5 is disposed between the steam turbine 2 and the gas turbine 1, and engaged and disengaged according to a difference in rotational speed. An SSS clutch 6 is disposed between the gas turbine 1 and the starter 7, and engaged and disengaged according to a difference in rotational speed. When the plant is stopped, the steam turbine 2 is separated from a shaft by using the SSS clutch 6 to independently stop the gas turbine 1.

### Content of the present invention

The problem to be resolved by the present embodiment is to provide a low speed synchronization method for a synchro-self-shifting clutch having a low speed protection function which can devoid the situation that the rotational speed of the output end and the rotational speed of the input end coincide with each other in the critical rotational speed interval of the synchro-self-shifting clutch when the output end is tripped in the process of low speed synchronization, and eliminate the risk of damage to the synchro-self-shifting clutch at low-speed synchronization to overcome the above-mentioned deficiencies in prior arts.

In order to solve the technical problem mentioned above, the present invention adopt the following technical solutions as defined by the appended claims. An embodiment shows a low speed synchronization method for a synchro-self-shifting clutch having a low speed protection function, wherein determining that a critical speed interval of the synchro-self-shifting clutch is n1-n2 r/min, and setting a synchronization target rotational speed of an input end and an output as M r/min, where M>n2; increasing a rotational speed of the output end to M r/min and keeping the rotational speed at M r/min, and then increasing a rotational speed of the input end, the synchro-self-shifting clutch to be automatic meshed when the input end has a trend to make its rotational speed more than the rotation speed of the output end; in a case that the rotational speed of the input end is increased to n r/min, and tripping occurs at the output end when n1<n<n2, speeding up the increase of the rotational speed of the input end, and controlling the time needed for increasing the rotational speed of the input end from n r/min to n2 r/min to be less than the time needed for reducing the rotational speed of the output end from M r/min to n2 r/min, so that the rotational speeds of the input end and the output end coincide with each other when the rotational speeds are greater than n2 r/min, accordingly making the synchro-self-shifting clutch to be automatic meshed.

Preferably, tripping occurs at the input end in a case that tripping occurs at the output end when the rotational speed of the input end is increased to n r/min, and when n≤n1.

Preferably, the rotational speed of the input end is speeded up continuously in a case that tripping occurs at the output end when the rotational speed of the input end is increased to n r/min, and when n≥n2, so that the rotational speeds of the input end and the output end coincide with each other when the rotational speeds are greater than n2 r/min, accordingly making the synchro-self-shifting clutch to be automatic meshed.

Preferably, the input end is a steam turbine from a gas-steam uniaxial combined cycle unit, and the output end is a gas turbine and a generator from the gas-steam uniaxial combined cycle unit.

Preferably, n1 and n2 satisfy the conditions as: 200≤n1≤500, 500<n2≤1000.

Preferably, n1 and n2 satisfy the conditions as: n1=350, n2=700.

Preferably, the M satisfies the condition as: 600≤M≤2000.

Preferably, the M satisfies the condition as: 800≤M≤1000.

Preferably, the M satisfies the condition as: M=900.

The embodiment has the following beneficial effects compared with prior arts:
The embodiment adopts a low speed synchronization method for a synchro-self-shifting clutch having a low speed protection function, even if the synchronous target speed m r/min is the lower speed close to the critical rotational speed interval n1-n2 r/min of the synchro-self- shifting clutch, by controlling the acceleration ability of the input end, in a case that tripping occurs at the output end and the speed drop in the process of increasing the rotational speed of the input end, by controlling the acceleration capacity of the input end, the rotational speed of the input end can be speeded up and can coincide with the rotational speed of the output end with each other at a speed greater than n2 r/min to achieve synchronization. Therefore, it can effectively avoid the situation that the rotational speeds of the output end and the input end coincide with each other in the critical rotational speed interval of the synchro-self-shifting clutch when tripping occurs at the output end in the process of low speed synchronization, and eliminate the risk of damage to the synchro-self-shifting clutch when the low speed synchronization occurs.

### Brief description of the drawings

Fig. 1 is a diagram showing a synchro-self-shifting clutch according to an existing technology to achieve an automatic meshing process.
Fig. 2 is a diagram showing a synchro-self-shifting clutch according to an existing technology when tripping occurs.
Fig. 3 is a diagram showing a synchronization process of a low speed synchronization method for a synchro-self-shifting clutch having a low speed protection function according to an embodiment of the present invention.
Fig. 4 is a diagram showing a low speed synchronization method for a synchro-self-shifting clutch having a low speed protection function according to an embodiment of the present invention which is applied in a synchronization process ,in which tripping occurs at an output end when a rotation speed of an input end n<n1.
Fig. 5 is a diagram showing a synchronization process of a low speed synchronization method for a synchro-self-shifting clutch having a low speed protection function according to an embodiment of the present invention which is applied in a synchronization process, in which tripping occurs at an output end when a rotation speed n of an input end satisfies n1<n<n2.

### Detailed description of the preferred embodiment

Hereinafter, embodiments of the present invention will be explained with reference to the drawings in detail. The embodiments used herein are intended merely to explain to the present invention, and should not be construed as limiting the scope of the present embodiment.

As shown in Fig. 3 to 5, there are shown to an embodiment of a low speed synchronization method for a synchro-self-shifting clutch having a low speed protection function according to the present embodiment.

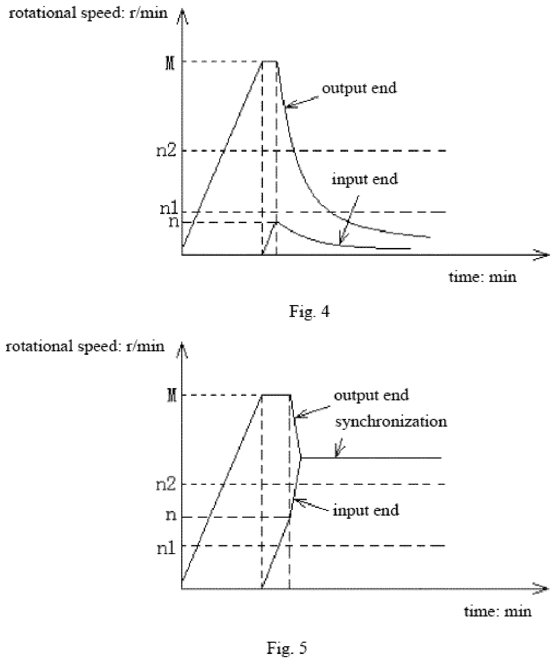

The low speed synchronization method for a synchro-self-shifting clutch having a low speed protection function according to the present embodiment is: a critical rotational speed interval of the synchro-self-shifting clutch is determined as n1-n2 r/min, and n1 and n2 should satisfy 0<n1<n2. A synchronization target rotational speed of an input end and an output is set as M r/min, and satisfies M>n2. In the present embodiment, the synchronization target rotational speed M r/min of the input end and the output is set to less than a rated working rotational speed of the synchro-self-shifting clutch, i.e., the low speed synchronization method for a synchro-self-shifting clutch according to the present embodiment is a synchronization method under a lower rotational speed to be less than the rated working rotational speed, and closed to the critical rotational speed interval n1-n2 r/min. As shown in Fig. 3, a rotational speed of the output end is increased to M r/min and keeping the rotational speed at M r/min, and then a rotational speed of the input end is increased, the synchro-self-shifting clutch is automatically meshed when the input end has a trend to make its rotational speed more than the rotation speed of the output end. That is, the synchro-self-shifting clutch connected with the input end and the output end is automatically meshed when the rotational speed of the input end is increased to a speed equal to the rotational speed of the output end and is kept a trend to increase the rotational speed of the input end, so that the rotational speed of the input end has a trend to be more than the rotational speed of the output end, and there is a relative speed difference between the rotational speed of the input end and the rotation speed of the output end. As shown in Fig. 4, in a case that the rotational speed of the input end is increased to n r/min, and tripping occurs at the output end when n1<n<n2, the increase of the rotational speed of the input end is speeded up, and the time needed for increasing the rotational speed of the input end from n r/min to n2 r/min is controlled to be less than the time needed for reducing the rotational speed of the output end from M r/min to n2 r/min. That is, the rotational speed of the input end has been increased to n2 r/min before the rotational speed of the output end is decreased to n2 r/min by controlling accelerating capacity of the input end, so that the rotational speeds of the input end and the output end coincide with each other when the rotational speeds are greater than n2 r/min, i.e., the rotational speed of the input end is equal to the rotational speed of the output end, accordingly making the synchro-self-shifting clutch to be automatically meshed. Therefore, it is ensured that the rotational speed of the input end and the rotational speed of the output end cannot be coincided each other in the critical rotational speed interval n1-n2 r/min of the synchro-self-shifting clutch, accordingly avoiding damage of the synchro-self-shifting clutch.

Therefore, the embodiment adopts a low speed synchronization method for a synchro-self-shifting clutch having a low speed protection function, even if the synchronous target speed m r/min is the lower speed close to the critical rotational speed interval n1-n2 r/min of the synchro-self-shifting clutch, by controlling the acceleration ability of the input end, in a case that tripping occurs at the output end and the speed drop in the process of increasing the rotational speed of the input end, by controlling the acceleration capacity of the input end, the rotational speed of the input end can be speeded up and can coincide with the rotational speed of the output end with each other at a speed greater than n2 r/min to achieve synchronization. Therefore, it can effectively avoid the situation that the rotational speeds of the output end and the input end coincide with each other in the critical rotational speed interval of the synchro-self-shifting clutch when tripping occurs at the output end in the process of low speed synchronization, and eliminate the risk of damage to the synchro-self-shifting clutch when the low speed synchronization occurs.

Furthermore, tripping occurs at the input end in a case that tripping occurs at the output end when the rotational speed of the input end is increased to n r/min, and when 0<n≤n1. As shown in Fig. 5, since the rotational speed of the input end n r/min has not reached the critical rotational speed interval n1-n2 r/min of the synchro-self-shifting clutch at this time, the rotational speed of the input end and the rotational speed of the output end decrease respectively after the input end is tripped with the output end, and the rotational speed of the input end and the rotational speed of the output end do not coincide each other within the critical rotational speed interval n1-n2 r/min of the synchro-self-shifting clutch, and the damage of the synchro-self-shifting clutch will not be caused.

Furthermore, the rotational speed of the input end is speeded up continuously in a case that tripping occurs at the output end when the rotational speed of the input end is increased to n r/min, and when n≥n2. The rotational speeds of the input end and the output end coincide with each other when the rotational speeds are greater than n2 r/min, because at this time the rotational speed of the input end has been more than the critical rotational speed interval n1-n2 r/min of the synchro-self-shifting clutch, thus after trapping occur at the output end, the rotational speed of the output end is decreased and the rotational speed of the input end is speeded up continuously, to achieve synchronization and thus will not cause damage to the synchro-self-shifting clutch.

The low speed synchronization method for a synchro-self-shifting clutch having a low speed protection function according to the present embodiment can be applied in a gas-steam uniaxial combined cycle unit, and it is especially suitable for the synchronization of steam turbine, gas turbine and generator from the gas-steam uniaxial combined cycle unit at low speed.

When the low speed synchronization method for a synchro-self-shifting clutch having a low speed protection function according to the present embodiment is applied to a gas-steam uniaxial combined cycle unit, the input end of the synchro-self-shifting clutch is a steam turbine from the gas-steam uniaxial combined cycle unit, and the output end of the synchro-self-shifting clutch is a gas turbine and a generator from the gas-steam uniaxial combined cycle unit. The critical speed interval of the synchro-self-shifting clutch n1-n2 r/min satisfy the condition as: 200≤n1≤500, 500<n2 ≤1000. Preferably, the critical speed interval of the synchro-self-shifting clutch n1-n2 r/min is 350-700 r/min.

In prior arts, the synchro-self-shifting clutch in the gas-steam uniaxial combined cycle unit is allowed to synchronize at a rotational speed of 3000 r/min only. However, the synchronous target rotational speed M r/min in the present embodiment satisfies: 600≤M≤2000. Preferably, the synchronous target rotational speed M r/min satisfies: 800≤M≤1000. More preferably, the synchronous target rotational speed M r/min is 900 r/min. That is, the low speed synchronization method for a synchro-self-shifting clutch having a low speed protection function according to the present embodiment enables the synchro-self-shifting clutch to achieve synchronization at a lower speed far below the synchronous rotational speed permitted by the existing technology, close to its critical rotational speed interval n1-n2 r/min. Therefore, the low speed synchronization method for a synchro-self-shifting clutch having a low speed protection function according to the present embodiment can greatly improve the flexibility of the gas-steam uniaxial combined cycle unit.

To sum up, the low speed synchronization method for a synchro-self-shifting clutch having a low speed protection function according to the present embodiment can effectively avoid the situation that the rotational speeds of the output end and the input end coincide with each other in the critical rotational speed interval of the synchro-self-shifting clutch when tripping occurs at the output end in the process of low speed synchronization, and eliminate the risk of damage to the synchro-self-shifting clutch when the low speed synchronization occurs.

The above mentioned is only the preferred embodiment of the invention, and it should be pointed out that a number of improvements and substitutions can also be made without departing from the technical principles of the embodiment to those of ordinary skilled in the arts, and these improvements and substitutions shall also be regarded as the scope of protection of the claims.

## Claims

1. A low speed synchronization method for a synchro-self-shifting clutch having a low speed protection function, **characterized in that** there is a critical rotational speed interval from an invalid state to activation state of the pawl for the synchro-self-shifting clutch having a low speed protection function and the method comprises steps as: determining that a critical speed interval of the synchro-self-shifting clutch is n1-n2 r/min, and setting a synchronization target rotational speed of an input end and an output as M r/min, where M>n2; increasing a rotational speed of the output end to M r/min and keeping the rotational speed at M r/min, and then increasing a rotational speed of the input end, the synchro-self-shifting clutch to be automatic meshed when the input end has a trend to make its rotational speed more than the rotation speed of the output end; wherein the term low speed in low speed synchronization method indicates a speed under a lower rotational speed to be less than a rated working rotational speed, and closed to the critical rotational speed interval n1-n2 r/min;
in a case that the rotational speed of the input end is increased to n r/min, and tripping occurs at the output end when n1<n<n2, speeding up the increase of the rotational speed of the input end, and controlling the time needed for increasing the rotational speed of the input end from n r/min to n2 r/min to be less than the time needed for reducing the rotational speed of the output end from M r/min to n2 r/min, so that the rotational speed of the input end and the rotational speed of the output end are coincided with each other when the rotational speeds thereof are greater than n2 r/min, in order to achieve the synchro-self-shifting clutch to be automatically meshed, to avoid the rotation speed of the input end and the rotational speed of the output end to be coincided with each other within a critical rotational speed interval of n1-n2 r/min when tripping occurs;
wherein, n1 indicates the upper limit of the critical rotational speed interval, n2 indicates the lower limit of the critical rotational speed interval, M indicates synchronization target rotational speed which is less than a rated working rotational speed, and closed to the critical rotational speed interval n1-n2 r/min, and n indicates a rotational speed greater than the lower limit n1 and less than the upper limit n2 in the process of increasing the rotational speed of the input end.

2. The low speed synchronization method for the synchro-self-shifting clutch having a low speed protection function according to claim 1, **characterized in that** tripping occurs at the input end in a case that tripping occurs at the output end when the rotational speed of the input end is increased to n r/min, and when n≤n1.

3. The low speed synchronization method for the synchro-self-shifting clutch having a low speed protection function according to claim 1 or 2, **characterized in that** the rotational speed of the input end is speeded up continuously in a case that tripping occurs at the output end when the rotational speed of the input end is increased to n r/min, and when n≥n2, so that the rotational speed of the input end and the rotational speed of the output end are coincided with each other when the rotational speeds thereof are greater than n2 r/min, in order to achieve the synchro-self-shifting clutch to be automatically meshed.

4. The low speed synchronization method for the synchro-self-shifting clutch having a low speed protection function according to any one of the claims 1 to 3, **characterized in that** the input end is a steam turbine from a gas-steam uniaxial combined cycle unit, and the output end is a gas turbine and a generator from the gas-steam uniaxial combined cycle unit.

5. The low speed synchronization method for the synchro-self-shifting clutch having a low speed protection function according to any one of the claims 1 to 4, **characterized in that** the n1 and n2 satisfy the condition as: 200≤n1≤500, 500<n2 ≤1000.

6. The low speed synchronization method for the synchro-self-shifting clutch having a low speed protection function according to claim 5, **characterized in that** the n1 and n2 satisfy the condition as: n1 =350, n2=700.

7. The low speed synchronization method for the synchro-self-shifting clutch having a low speed protection function according to any one of the claims 1 to 6, **characterized in that** the M satisfies the condition as: 600≤M≤2000.

8. The low speed synchronization method for the synchro-self-shifting clutch having a low speed protection function according to claim 7, **characterized in that** the M satisfies the condition as: 800≤M≤1000.

9. The low speed synchronization method for the synchro-self-shifting clutch having a low speed protection function according to claim 8, **characterized in that** the M satisfies the condition as: M=900.

## Patentansprüche

1. Niedrigdrehzahlsynchronisationsverfahren für eine synchro-selbstschaltende Kupplung mit Niedrigdrehzahlschutzfunktion, **dadurch gekennzeichnet, dass** ein kritisches Drehzahlintervall zwischen einem ungültigen Zustand und einem Aktivierungszustand der Sperrklinke für die synchro-selbstschaltende Kupplung mit Niedrigdrehzahlschutzfunktion besteht und das Verfahren die folgenden Schritte umfasst: Bestimmen, dass ein kritisches Drehzahlintervall der synchroselbstschaltenden Kupplung n1-n2 U/min beträgt, und Einstellen einer Synchronisationssolldrehzahl einer Antriebsseite und eines Abtriebs als M U/min, wobei M>n2; Erhöhen einer Drehzahl der Abtriebsseite auf M U/min und Halten der Drehzahl bei M U/min, und anschließend Erhöhen einer Drehzahl der Antriebsseite, wobei die synchro-selbstschaltende Kupplung automatisch eingerückt wird, wenn die Antriebsseite dazu tendiert, ihre Drehzahl über die Drehzahl der Abtriebsseite hinaus zu erhöhen; wobei der Begriff "niedrige Drehzahl" beim Niedrigdrehzahlsynchronisationsverfahren eine Drehzahl unterhalb einer niedrigeren Drehzahl angibt, die niedriger als eine Nennarbeitsdrehzahl und nahe dem kritischen Drehzahlintervall n1-n2 U/min ist;
in einem Fall, in dem die Drehzahl der Antriebsseite auf n U/min erhöht wird und eine Auslösung an der Abtriebsseite auftritt, wenn n1<n<n2, Beschleunigen der Erhöhung der Drehzahl der Antriebsseite und Steuern der Zeit, die für die Erhöhung der Drehzahl der Antriebsseite von n U/min auf n2 U/min benötigt wird, sodass sie geringer als die Zeit ist, die für die Reduzierung der Drehzahl der Abtriebsseite von M U/min auf n2 U/min benötigt wird, sodass die Drehzahl der Antriebsseite und die Drehzahl der Abtriebsseite miteinander übereinstimmen, wenn deren Drehzahlen größer als n2 U/min sind, um zu erreichen, dass die synchro-selbstschaltende Kupplung automatisch einrückt, um zu vermeiden, dass die Drehzahl der Antriebsseite und die Drehzahl der Abtriebsseite innerhalb eines kritischen Drehzahlintervalls von n1-n2 U/min miteinander übereinstimmen, wenn ein Auslösen auftritt;
wobei n1 den oberen Grenzwert des kritischen Drehzahlintervalls angibt, n2 den unteren Grenzwert des kritischen Drehzahlintervalls angibt, M die Synchronisationssolldrehzahl angibt, die kleiner als eine Nennarbeitsdrehzahl ist und nahe dem kritischen Drehzahlintervall n1-n2 U/min liegt, und n eine Drehzahl angibt, die größer als der untere Grenzwert n1 und kleiner als der obere Grenzwert n2 beim Erhöhen der Drehzahl der Antriebsseite ist.

2. Niedrigdrehzahlsynchronisationsverfahren für die synchro-selbstschaltende Kupplung mit Niedrigdrehzahlschutzfunktion gemäß Anspruch 1, **dadurch gekennzeichnet, dass** ein Auslösen auf der Abtriebsseite erfolgt, wenn die Drehzahl der Antriebsseite auf n U/min erhöht wird und wenn n≤n1.

3. Niedrigdrehzahlsynchronisationsverfahren für eine synchro-selbstschaltende Kupplung mit Niedrigdrehzahlschutzfunktion gemäß Anspruch 1 oder 2, **dadurch gekennzeichnet, dass** die Drehzahl der Antriebsseite in einem Fall, in dem ein Auslösen an der Abtriebsseite auftritt, kontinuierlich erhöht wird, wenn die Drehzahl der Antriebsseite auf n U/min erhöht wird, und wenn n≥n2, sodass die Drehzahl der Antriebsseite und die Drehzahl der Abtriebsseite miteinander übereinstimmen, wenn deren Drehzahlen größer als n2 U/min sind, um zu erreichen, dass die synchro-selbstschaltende Kupplung automatisch einrückt.

4. Niedrigdrehzahlsynchronisationsverfahren für eine synchro-selbstschaltende Kupplung mit Niedrigdrehzahlschutzfunktion gemäß einem der Ansprüche 1 bis 3, **dadurch gekennzeichnet, dass** die Antriebsseite eine Dampfturbine aus einer einachsigen Gas-Dampf-Kombianlage ist und die Abtriebsseite eine Gasturbine und ein Generator aus der einachsigen Gas-Dampf-Kombianlage ist.

5. Niedrigdrehzahlsynchronisationsverfahren für eine synchro-selbstschaltende Kupplung mit Niedrigdrehzahlschutzfunktion gemäß einem der Ansprüche 1 bis 4, **dadurch gekennzeichnet, dass** n1 und n2 die folgende Bedingung erfüllen: 200≤n1≤500, 500<n2≤1000.

6. Niedrigdrehzahlsynchronisationsverfahren für eine synchro-selbstschaltende Kupplung mit Niedrigdrehzahlschutzfunktion gemäß Anspruch 5, **dadurch gekennzeichnet, dass** n1 und n2 die folgende Bedingung erfüllen: n1=350, n2=700.

7. Niedrigdrehzahlsynchronisationsverfahren für eine synchro-selbstschaltende Kupplung mit Niedrigdrehzahlschutzfunktion gemäß einem der Ansprüche 1 bis 6, **dadurch gekennzeichnet, dass** M die folgende Bedingung erfüllt: 600≤M≤2000.

8. Niedrigdrehzahlsynchronisationsverfahren für die synchro-selbstschaltende Kupplung mit Niedrigdrehzahlschutzfunktion gemäß Anspruch 7, **dadurch gekennzeichnet, dass** M die folgende Bedingung erfüllt: 800≤M≤1000.

9. Niedrigdrehzahlsynchronisationsverfahren für die synchro-selbstschaltende Kupplung mit Niedrigdrehzahlschutzfunktion gemäß Anspruch 8, **dadurch gekennzeichnet, dass** M die folgende Bedingung erfüllt: M=900.

## Revendications

1. Procédé de synchronisation à basse vitesse pour un embrayage à auto-changement de rapport synchrone ayant une fonction de protection à basse vitesse, **caractérisé en ce qu'**il y a un intervalle de vitesse de rotation critique depuis un état invalide jusqu'à un état d'activation du cliquet pour l'embrayage à auto-changement de rapport synchrone ayant une fonction de protection à basse vitesse et le procédé comprend les étapes suivantes : la détermination qu'un intervalle de vitesse critique de l'embrayage à auto-changement de rapport synchrone est n1-n2 tr/min, et le réglage d'une vitesse de rotation cible de synchronisation d'une extrémité d'entrée et d'une sortie sous la forme M tr/min, où M>n2 ; l'augmentation d'une vitesse de rotation de l'extrémité de sortie à M tr/min et le maintien de la vitesse de rotation à M tr/min, et puis l'augmentation d'une vitesse de rotation de l'extrémité d'entrée, l'embrayage à auto-changement de rapport synchrone étant destiné à être engrené automatiquement lorsque l'extrémité d'entrée a tendance à faire en sorte que sa vitesse de rotation soit supérieure à la vitesse de rotation de l'extrémité de sortie ; dans lequel le terme basse vitesse dans le procédé de synchronisation à basse vitesse indique une vitesse inférieure à une vitesse de rotation inférieure devant être inférieure à une vitesse de rotation d'utilisation nominale, et proche de l'intervalle de vitesse de rotation critique n1-n2 tr/min ;
au cas où la vitesse de rotation de l'extrémité d'entrée est augmentée à n tr/min, et un désenclenchement se produit à l'extrémité de sortie lorsque n1<n<n2, l'accélération de l'augmentation de la vitesse de rotation de l'extrémité d'entrée, et la commande du temps nécessaire pour l'augmentation de la vitesse de rotation de l'extrémité d'entrée de n tr/min à n2 tr/min pour qu'il soit inférieur au temps nécessaire pour la réduction de la vitesse de rotation de l'extrémité de sortie de M tr/min à n2 tr/min, pour que la vitesse de rotation de l'extrémité d'entrée et la vitesse de rotation de l'extrémité de sortie soient mises en coïncidence l'une avec l'autre lorsque les vitesses de rotation de celles-ci sont supérieures à n2 tr/min, afin de faire en sorte que l'embrayage à auto-changement de rapport synchrone soit automatiquement engrené, pour éviter que la vitesse de rotation de l'extrémité d'entrée et la vitesse de rotation de l'extrémité de sortie soient mises en coïncidence l'une avec l'autre au sein d'un intervalle de vitesse de rotation critique de n1-n2 tr/min lorsqu'un désenclenchement se produit ;
dans lequel, n1 indique la limite supérieure de l'intervalle de vitesse de rotation critique, n2 indique la limite inférieure de l'intervalle de vitesse de rotation critique, M indique la vitesse de rotation cible de synchronisation qui est inférieure à une vitesse de rotation d'utilisation nominale, et proche de l'intervalle de vitesse de rotation critique n1-n2 tr/min, et n indique une vitesse de rotation supérieure à la limite inférieure n1 et inférieure à la limite supérieure n2 dans le processus de l'augmentation de la vitesse de rotation de l'extrémité d'entrée.

2. Procédé de synchronisation à basse vitesse pour l'embrayage à auto-changement de rapport synchrone ayant une fonction de protection à basse vitesse selon la revendication 1, **caractérisé en ce qu'**un désenclenchement se produit à l'extrémité d'entrée au cas où un désenclenchement se produit à l'extrémité de sortie lorsque la vitesse de rotation de l'extrémité d'entrée est augmentée à n tr/min, et lorsque n≤n1.

3. Procédé de synchronisation à basse vitesse pour l'embrayage à auto-changement de rapport synchrone ayant une fonction de protection à basse vitesse selon la revendication 1 ou 2, **caractérisé en ce que** la vitesse de rotation de l'extrémité d'entrée est accélérée en continu au cas où un désenclenchement se produit à l'extrémité de sortie lorsque la vitesse de rotation de l'extrémité d'entrée est augmentée à n tr/min, et lorsque n≥n2, pour que la vitesse de rotation de l'extrémité d'entrée et la vitesse de rotation de l'extrémité de sortie soient mises en coïncidence l'une avec l'autre lorsque les vitesses de rotation de celles-ci sont supérieures à n2 tr/min, afin de faire en sorte que l'embrayage à auto-changement de rapport synchrone soit automatiquement engrené.

4. Procédé de synchronisation à basse vitesse pour l'embrayage à auto-changement de rapport synchrone ayant une fonction de protection à basse vitesse selon l'une quelconque des revendications 1 à 3, **caractérisé en ce que** l'extrémité d'entrée est une turbine à vapeur d'une unité uniaxiale à cycle combiné gaz-vapeur, et l'extrémité de sortie est une turbine à gaz et un générateur de l'unité uniaxiale à cycle combiné gaz-vapeur.

5. Procédé de synchronisation à basse vitesse pour l'embrayage à auto-changement de rapport synchrone ayant une fonction de protection à basse vitesse selon l'une quelconque des revendications 1 à 4, **caractérisé en ce que** n1 et n2 satisfont à la condition suivante : 200≤n1≤500, 500<n2≤1000.

6. Procédé de synchronisation à basse vitesse pour l'embrayage à auto-changement de rapport synchrone ayant une fonction de protection à basse vitesse selon la revendication 5, **caractérisé en ce que** n1 et n2 satisfont à la condition suivante : n1=350, n2=700.

7. Procédé de synchronisation à basse vitesse pour l'embrayage à auto-changement de rapport synchrone ayant une fonction de protection à basse vitesse selon l'une quelconque des revendications 1 à 6, **caractérisé en ce que** M satisfait à la condition suivante : 600≤M≤2000.

8. Procédé de synchronisation à basse vitesse pour l'embrayage à auto-changement de rapport synchrone ayant une fonction de protection à basse vitesse selon la revendication 7, **caractérisé en ce que** M satisfait à la condition suivante : 800≤M≤1000.

9. Procédé de synchronisation à basse vitesse pour l'embrayage à auto-changement de rapport synchrone ayant une fonction de protection à basse vitesse selon la revendication 8, **caractérisé en ce que** M satisfait à la condition suivante : M=900.
